**Europäisches Patentamt**

**European Patent Office**

**Office européen des brevets**

(11) Veröffentlichungsnummer: **0 213 369**
**A1**

# (12) EUROPÄISCHE PATENTANMELDUNG

(21) Anmeldenummer: **86110110.3**

(22) Anmeldetag: **23.07.86**

(51) Int. Cl.⁴: **A 01 M 1/14**

(30) Priorität: **06.08.85 DE 8522621 U**

(43) Veröffentlichungstag der Anmeldung:
**11.03.87 Patentblatt 87/11**

(84) Benannte Vertragsstaaten:
**AT BE CH DE FR GB IT LI LU NL SE**

(71) Anmelder: **Roth GmbH**
**Pfingstwiese 1**
**D-5427 Bad Ems(DE)**

(72) Erfinder: **Roth, Erich, Dipl.-Chem.**
**Otto-Balzer-Strasse 29**
**D-5427 Bad Ems(DE)**

(72) Erfinder: **Glasmann, Heinrich**
**Glückaufstrasse 21**
**D-5427 Bad Ems(DE)**

(74) Vertreter: **Goddar, Heinz J., Dr. et al,**
**FORRESTER & BOEHMERT Widenmayerstrasse 4/I**
**D-8000 München 22(DE)**

(54) Vorrichtung zum Fangen und Abtöten von Insekten.

(57) Vorrichtung zum Fangen und Abtöten von flugfähigen Insekten, wie Mücken, Fliegen oder dergleichen, mit einer klebrigen Haftfolie (18), dadurch gekennzeichnet, daß die Haftfolie (18) in einer Anzahl nacheinander freilegbarer Lagen angeordnet ist.

EP 0 213 369 A1

1

---

Vorrichtung zum Fangen und Abtöten von Insekten

---

Die Erfindung betrifft eine Vorrichtung zum Fangen und Abtöten von flugfähigen Insekten, wie Mücken, Fliegen oder dergleichen, mit einer klebrigen Haftfolie.

Bekannte Vorrichtungen der vorstehend beschriebenen Art, in Form der vielfach verwendeten sogenannten "Fliegenfänger", die im wesentlichen aus einem frei herabhängenden langgestreckten Haftfolienstreifen bestehen, der klebrig beschichtet ist, so daß anfliegende Insekten hieran hängenbleiben und verenden, haben den Nachteil, daß die betreffende Vorrichtung bereits nach relativ kurzer

423

Benutzungsdauer durch die daran haftenden Insektenleichen
so stark bedeckt ist, daß ihre weitere Verwendbarkeit
in Frage gestellt ist. Darüber hinaus bieten die anhaftenden
Insektenleichen einen unästhetischen Anblick, so daß schon
nach relativ kurzer Zeit die gesamte Vorrichtung weggeworfen und durch eine neue ersetzt werden muß.

Der Erfindung liegt die Aufgabe zugrunde, eine Vorrichtung
der gattungsgemäßen Art zu schaffen, welche eine längere
nutzbare Verwendungsdauer gewährleistet und den unästhetischen Anblick anhaftender Insektenleichen vermeidet.

Erfindungsgemäß wird die Aufgabe dadurch gelöst, daß
die Haftfolie in einer Anzahl nacheinander freilegbarer
Lagen angeordnet ist.

Dabei kann eine kalenderblockartige Anordnung eines
Stapels nacheinander abreißbarer und dabei die jeweils
nachfolgende Haftfolie freilegender Haftfolien vorgesehen sein.

Auch kann eine einen Vorrat an Haftfolie tragende Folienrolle vorgesehen sein, wobei die einzelnen Haftfolienlagen durch eine an einer Umfangsstelle der Folienrolle
angeordnete Abreißperforierung durchsetzt sind.

Die Erfindung sieht weiterhin ggf. einen einen Haltedorn
oder dergleichen aufweisenden, auf eine Standfläche aufweisenden Halter zum Aufstecken der auswechselbar ausgebildeten Folienrolle vor.

Auch kann die Erfindung einen an dem den Halter gegenüberliegenden Ende in eine Innenhülse der Folienrolle
einführbares Griffstück zum Festhalten der Folienrolle
gegen die beim Freilegen einer neuen Haftfolie aufzubringende Zugkraft vorsehen.

Die Erfindung sieht bei einer besonderen Ausführungsform ggf. auch vor, daß die Haftfolie mit einem Insektenlockstoff versehen ist.

Eine weitere Ausführungsform der Erfindung ist dadurch
gekennzeichnet, daß die Haftfolie mit einem Kontaktgift versehen ist.

Dadurch, daß bei der Erfindung statt einer einlagigen
Haftfolie nach Art der bekannten Fusselrolle, wie sie
zum Reinigen von Bekleidungsstücken etc. seit langem
Verwendung findet, in bevorzugter Ausführungsform eine
mehrlagige Haftfolie in Form einer Folienrolle vorgesehen ist, kann immer wieder nach kurzer Zeit, sobald
nämlich auf der gerade freiliegenden Außenfläche der
jeweils benutzten Haftfolie eine Anzahl von Insektenleichen anhaftet, die außenliegende Folie abgezogen
werden, woraufhin sich dann eine neue, völlig unberührte
Haftfolie zum Insektenfangen anbietet. Natürlich ist
bei der bevorzugten Ausführungsform mit Folienrolle
darauf zu achten, daß die freiliegende Oberfläche der
jeweils äußeren Haftfolie möglichst groß ist, indem
nämlich die Folienrolle entweder besonders langgestreckt
oder aber mit relativ großem Durchmesser ausgebildet
wird, wobei die letztgenannte Ausführungsform noch
den Vorteil hat, daß besonders häufige Abziehvorgänge möglich sind, mit jedes Mal erfolgendem Freilegen einer
frischen Haftfolie. Der Erfindungsgedanke ist jedoch
natürlich nicht auf diese Ausführungsform beschränkt,
vielmehr könnten auch kalenderblockartig Haftfolienblätter angeordnet werden, wobei sich das jeweils obere
dann abreißen läßt, aber auch der herkömmliche Fliegenfänger ließe sich entsprechend ausgestalten, wobei also
statt eines langgestreckten Haftfolienstreifens dann
ein mehrlagiger Streifen verwendet würde.

Weitere Merkmale und Vorteile der Erfindung ergeben sich
aus der nachstehenden Beschreibung, in der ein Ausführungsbeispiel anhand der schematischen Zeichnung im einzelnen
erläutert ist.

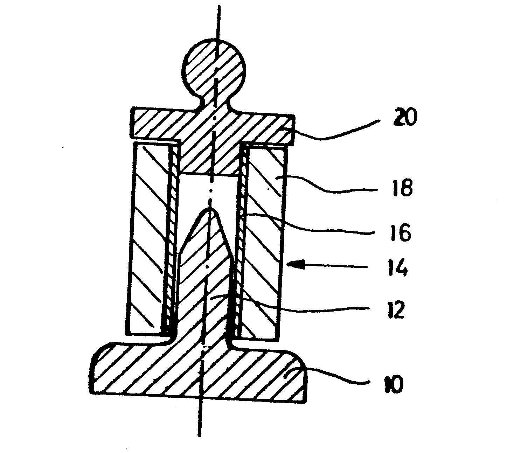

Dabei zeigt die aus einer einzigen Figur bestehende
Zeichnung ein Ausführungsbeispiel der Vorrichtung nach
der Erfindung im vertikalen Längsschnitt.

Wie die Zeichnung erkennen läßt, weist das dort gezeigte Ausführungsbeispiel der Vorrichtung nach der
Erfindung einen auf eine Standfläche, horizontal angeordnet, aufstellbaren Halter 10 mit einem Haltedorn 12
auf, auf den eine Folienrolle 14 aufsteckbar ist. Die
auswechselbare Folienrolle 14 weist, aufgewickelt auf
eine Innenhülse 16, eine mehrlagig angeordnete Haftfolie 18, mit entsprechender, von Fusselrollen oder
dergleichen her bekannter achsenparalleler Perforierung
auf, wobei natürlich im Versendungszustand, also vor
Verwendung der Rolle, außen eine Schutzfolie aufgeklebt ist. Die Perforierung ist dabei, anders als
bei Fusselrollen, die ja dagegen gesichert werden müssen, daß sich beim Reinigen von Bekleidungsstücken äußere
Folienschichten ablösen, so perforiert, daß ein einwandfreies Ablösen der jeweils äußeren, ggf. mit Insekten
behafteten Schicht der Haftfolie 18 möglich ist. In das
in der Zeichnung oben gezeigte Ende der Folienrolle 14
ist ein Griffstück 20 eingesteckt, welches beim Abziehen
der jeweils äußeren, mit verendeten Insekten behafteten
Schicht der Haftfolie 18 zum Halten der Gesamtvorrichtung
verwendet werden kann, um ein entsprechendes Sichern
gegen die beim Abziehen der äußeren Folienschicht ausgeübte Zugkraft zu bieten.

Die in der vorstehenden Beschreibung, in der Zeichnung
sowie in den Ansprüchen offenbarten Merkmale der Erfindung können sowohl einzeln als auch in beliebiger
Kombination für die Verwirklichung der Erfindung in
ihren verschiedenen Ausführungsformen wesentlich sein.

−5a−

BEZUGSZEICHENLISTE
(LIST OF REFERENCE NUMERALS)

| | |
|---|---|
| 1 | |
| 2 | |
| 3 | |
| 4 | |
| 5 | |
| 6 | |
| 7 | |
| 8 | |
| 9 | |
| 10 | Halter |
| 11 | |
| 12 | Haltedorn |
| 13 | |
| 14 | Folienrolle |
| 15 | |
| 16 | Hülse |
| 17 | |
| 18 | Haftfolie |
| 19 | |
| 20 | Griffstück |
| 21 | |
| 22 | |
| 23 | |
| 24 | |
| 25 | |
| 26 | |
| 27 | |
| 28 | |
| 29 | |
| 30 | |

A n s p r ü c h e
=====================

1. Vorrichtung zum Fangen und Abtöten von flugfähigen
Insekten, wie Mücken, Fliegen oder dergleichen, mit
einer klebrigen Haftfolie, dadurch gekennzeichnet,
daß die Haftfolie (18) in einer Anzahl nacheinander
freilegbarer Lagen angeordnet ist.

2. Vorrichtung nach Anspruch 1, gekennzeichnet durch
eine kalenderblockartige Anordnung eines Stapels nacheinander abreißbarer und dabei die jeweils nachfolgende
Haftfolie freilegender Haftfolien (18).

3. Vorrichtung nach Anspruch 1 oder 2, gekennzeichnet
durch eine einen Vorrat an Haftfolie (18) tragende
Folienrolle (14), wobei die einzelnen Haftfolienlagen
durch eine an einer Umfangsstelle der Folienrolle angeordnete Abreißperforierung durchsetzt sind.

4. Vorrichtung nach Anspruch 3, gekennzeichnet durch
einen einen Haltedorn (12) oder dergleichen aufweisenden,
auf eine Standfläche aufweisenden Halter (10) zum Aufstecken der auswechselbar ausgebildeten Folienrolle
(14).

5. Vorrichtung nach Anspruch 4, gekennzeichnet durch einen
an dem den Halter (10) gegenüberliegenden Ende in eine
Innenhülse (16) der Folienrolle (14) einführbares Griffstück (20) zum Festhalten der Folienrolle (14) gegen
die beim Freilegen einer neuen Haftfolie (18) aufzubringende Zugkraft.

6. Vorrichtung nach einem der vorangehenden Ansprüche,
dadurch gekennzeichnet, daß die Haftfolie (18) mit
einem Insektenlockstoff versehen ist.

7. Vorrichtung nach einem der vorangehenden Ansprüche,
dadurch gekennzeichnet, daß die Haftfolie (18) mit
einem Kontaktgift versehen ist.

1/1

Europäisches Patentamt

**EUROPÄISCHER RECHERCHENBERICHT**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| X | US-A-2 911 756 (R.J. GEARY) * Spalte 3, Zeilen 40-62 * | 1-3 | A 01 M 1/14 |
| A | * Spalte 1, Zeilen 42-51 * | 6,7 | |
| P,X | DE-U-8 521 742 (FR. KAISER GmbH) * Seite 4, Absatz 2 * | 1,2 | |
| A | GB-A- 594 991 (KAY BROTHERS LTD.) | | |
| A | DE-C- 273 005 (PYRAMIDEN-FLIEGENFÄNGERFABRIK MAX DAMETZ) | | |

| | |
|---|---|
| | RECHERCHIERTE SACHGEBIETE (Int Cl 4) |
| | A 01 M |

Der vorliegende Recherchenbericht wurde für alle Patentansprüche erstellt

| Recherchenort DEN HAAG | Abschlußdatum der Recherche 05-11-1986 | Prüfer NEHRDICH H.J |
|---|---|---|